# EUROPEAN PATENT APPLICATION

(11) **EP 2 765 563 A1**
(43) Date of publication of application: **13.08.2014**
(21) Application number: 13154706.9
(22) Date of filing: 08.02.2013
(51) Int. Cl.: G08B 13/193

(54) **Detector**

(71) Applicant: Siemens AB, 17141 Solna (SE)
(72) Inventor: Fischer, Simon Daniel, 6042 Dietwil (CH); Müller, Kurt, 5600 Lenzburg (CH)
(74) Representative: Maier, Daniel Oliver

(57) **Abstract**

The invention concerns a detector with a frame (2), a window (3) for allowing radiation to enter, outlook sensors (41, 42, 43) for sensing radiation, a unit for processing outlook sensor signals and outlook mirrors (501 - 591, 601 - 691, 701 - 791) that are shaped and mounted in the frame (2) for reflecting radiation from outside detection zones onto the outlook sensor (41, 42, 43), some of which are mounted near the window (3) such that they face each other. When the detector is installed and operated as intended, the perpendicular to the inner window surface in its centroid (9) of the perpendicular projections of the mirror surfaces of the near-mounted mutually-facing outlook mirrors (501 - 507, 601 - 607, 701 - 707) onto the inner window surface intersects the horizontal plane at floor level outside. Any sector of the horizontal plane around said perpendicular without the detection zones of the near-mounted mutually-facing outlook mirrors (501 - 507, 601 - 607, 701 - 707) extends over 160° at most.

## Description

The invention concerns a detector according to the pre-characterising part of claim 1. In short, three or more outlook mirrors are placed near the window, facing each other. This allows an area on the inner window surface to be enclosed that is hole-less, or as good as makes no essential difference, optics-wise. In terms of topology, the area is simply-connected. These outlook mirrors are oriented to forward outside radiation that has entered the window within such area towards one or more outlook sensors, possibly via other outlook mirrors.

The distance between these outlook mirrors and the window is zero or so small that they can efficiently reflect radiation that enters the window under an acute angle to its outer surface, typically including radiation that comes in at 20° thereto, for further processing at the inside of the detector. This roughly equates to the closest point on the mirror surface being closer than 20% of the largest extention of the window in front thereof, or alternatively closer than 60% of the largest extention of its mirror surface perpendicular to the local inner window surface. The outlook mirrors face each other in the sense that their mirror surfaces are within view of each other, or rather that the areas through which the radiation from their outside detection zones enters the window, overlap.

Such detectors can be made suitable to be mounted flush or near-flush in a wall or a ceiling, conveniently in a standardised socket that has been installed therein for some other purpose. The outlook mirrors that are mounted near a flat or flattish window can look out under comparatively steep angles. These outlook mirrors also allow a wide angle of view around a perpendicular to the window surface, which is a necessity for a large detection range, although as such not sufficient. In particular, such detectors can be made suitable for central placement in the ceiling, away from the walls.

However, just like optical properties and aesthetics do, enclosing a flush mounted detector puts limitations on shape and size of detector windows. At the same time, the detectors should monitor a large area by a high number of detection zones with high and highly uniform sensitivity for each zone.

Generally speaking, the use of outlook mirrors allows for creating more detection zones than the number of outlook sensors would otherwise. A plurality of outlook mirrors can be produced economically by injection-moulding substrates and selectively coating several mirrors on each one. Outlook mirrors are usually shaped as sections of a near-perfect circular paraboloid, or flat in the extreme, thus limiting optical aberration and creating a sharp focal point. To an extent, deviation from a circular paraboloid can be helpful for adjusting focal length, as long as the consequence of optical aberration on yield and frequency shift remains acceptable.

Large sensor signal amplitudes help separate noise and disturbing signals from the wanted signal, provided that such noise and disturbing signals do not scale with the size of the optics, in particular to assure electromagnetic compatibility and to suppress microphonic effects. Also, a detector ideally is similarly sensitive for radiation from the various detection zones. For several reasons, homogeneous signals are beneficial for the signal analysis by the dedicated detector unit. In a presence detector or in a heat detector for example, uniform amplitude sensitivity over all zones implies that alerting only depends on the radiation source, not on its position within the detection area. If this were otherwise, an alarm level should be matched to the weakest zone, and immunity to false alarms is reduced in the other zones.

In a motion detector, another kind of detector sensitivity should additionally be sufficiently similar for all detection zones, namely the so-called signal frequency. In this field, a skilled person understands the word frequency to reflect the main frequency component of the outlook sensor signals that arise when an object moves through detection zones. The frequency may be calculated for instance on the basis of the delay between the single positive and negative peaks that arise when the processing unit adds the signal strengths of two reversely polarised pyroelectric sensors that observe a detection zone while a radiating object moves there through. The frequency may even be calculated from a single signal peak by using Fourier-analysis. Depending on detector construction and method of calculation, the frequency is a more or less accurate measure for the velocity of movement. Uniform frequency sensitivity allows distinguishing known disturbing signals from wanted signals. The alerting velocity band becomes uniform for all zones.

In spite of the foregoing, many known motion detectors with mirror optics or Fresnel optics are constructed with a reduced focal length for their far zones in order to reduce the thickness of the detector. As a consequence, everything else remaining equal, the frequency of the signals in the far zones will be smaller than in other zones, resulting in an undesired shift of the alerting velocity band to higher velocities, or a reduction of the immunity against disturbance sources of low frequency, such as air turbulence. Often, a low focal length is compensated by an increased area at the expense of other zones, which causes the motion detectors to be oversensitive for high object velocities.

At an expense in sensitivity or detection zone number, a detector can be made more compact while increasing reach and uniformity by linking outlook mirrors, which means that radiation from a detection zone is first reflected by a primary mirror, then by a secondary mirror and possibly even by further mirrors before it reaches the outlook sensor. Such arrangements are best achieved by so-called folded mirror optics. In this way, the large focal lengths required for distant detection zones can be cut in part. Care must be taken however not to lose much radiation that falls outside the mirror area with each reflection, at the expense of the resulting sensor signal amplitude.

Generally speaking, efficient production processes must be used for fastening components on printed circuit boards ("PCB"), in particular surface mount technology ("SMT") and, for instance for some pyrosensors, through-hole technology ("THT"). SMT is very efficient but only allows for mounting a component flat onto the PCB surface, without the option of tilting, thus limiting the freedom of where to place radiation sensors or senders.

As flush or near-flush mounted detectors are partially enclosed, there is no strict need for them to have a complete housing. Although such detectors benefit from having a closed frame for avoiding dust to settle on optical elements before installation, the nature of their application allows for use of an open frame as well.

The window material is dependent on the type of sensors and detector application and might for instance be silicon, glass or an opaque plastic that transmits the relevant radiation well. The window may consist of a single piece of such material, or instead of closely set parts.

A detector according to the pre-characterising part of patent claim 1, although not specifically designed for central mounting in a ceiling, is described in European patent application EP-A1-2'450'859. The patent application proposes to use primary outlook mirrors mounted near a substantially flat, essentially vertical window that face each other around a large simply-connected space thereon. They efficiently share a large central window area but fail to optimise use thereof in the sense of the invention. The angles of view in which the radiation from their detection zones enters the window are not as acute or as widely distributed as might be possible.

Detectors of such build might also be known from EP-A1-2'259'238. Within the detector, four rows of outlook mirrors are mounted near the horizontal window around the centre thereof. The mirrors in each row are essentially mounted in parallel, facing away from the mirrors in other such rows behind them. Even neighbouring outlook mirrors in each row barely face each other, if at all, because they are fanning out, so to speak, each more or less using its own small window area to observe a detection zone on the room floor. The detection zones of the near-mounted outlook mirrors in each row are located within only a quarter of the floor below the detector window in operative orientation. The rest of the floor is void of detection zones for the outlook mirrors in the row. This demonstrates a loss of effective use of window area, at the expense of sensitivity and yield, because radiation from the rest of the floor that enters the window in the area in front of a mirror row is not reflected by near-mounted mirrors at all and therefore lost for processing. Additionally, the central positioning of the four rows of near-mounted outlook mirror means that they must be limited in size and number, in order to limit the blind spots immediately behind each and in order to leave space for radiation from nearby zones to pass next to them towards other mirrors mounted higher up in the detector. But as mirrors mounted near the window are best used to monitor distant detection zones under very acute angles to the window surface and therefore should be large, this limitation comes at a price in reach or sensitivity for distant zones, and also in uniformity of sensitivity.

It is desirable to have a detector that essentially overcomes the disadvantages of the prior art. According to the invention of claim 1, the object is achieved in that the near-mounted mutually-facing outlook mirrors of the detector, when operated as intended, observe detection zones at floor level that are not enclosed within a quarter circle or semicircle around the intersection point of the central perpendicular to the detector window, but include detection zones at floor level over a sector around the perpendicular that spans at least 200°. Preferably, sectors without these detection zones extend around the intersection point at acute angles only. This allows efficient, respectively efficient and complete, capture through a window of limited size of radiation under steep angles and from many directions by large outlook mirrors, thus enhancing sensitivity and uniformity of sensitivity for distant detection zones.

Preferably, at least three of said near-mounted outlook mirrors are mounted such that each mirror surface at least in some locations thereof extends at an obtuse angle to the inner window surface where the perpendicular to the latter intersects the former. In summary, their mirror surface extends essentially perpendicular to the local inner surface of the window. This is related to the location of other optical elements, such as primary look-down mirrors, secondary mirrors or outlook sensors, given limitations on the size of the detector, the requirement easily to connect outlook sensors to a PCB and the loss of overall optical properties because of their physical extension. It turns out that the space in between the near-mounted outlook mirrors and, in an operatively installed detector, higher up, is better used than such alternatives as mounting secondary mirrors centrally near the inner surface of the window or mounting outlook sensors near the window inbetween the near-mounted outlook mirrors themselves.

The embodiments of the invention have been described with help of the following drawings.
Figure 1 shows some essential components of a ceiling detector according to the invention in a cross-sectional side view thereof.
Figure 2 schematically shows a part of the frame and the mirror assemblies of said detector in a perspective view thereof.
Figure 3 shows a part of the frame and the mirror assemblies of said detector in a top view thereof.
Figure 4 shows the mirror surfaces of a mirror assembly of said detector in front view.
Figure 5 shows the detection zones at floor level of said detector in operation in top view.
Figure 6 shows said detection zones that correspond to the twenty one near-mounted and mutually-facing outlook mirrors of said detector in top view.

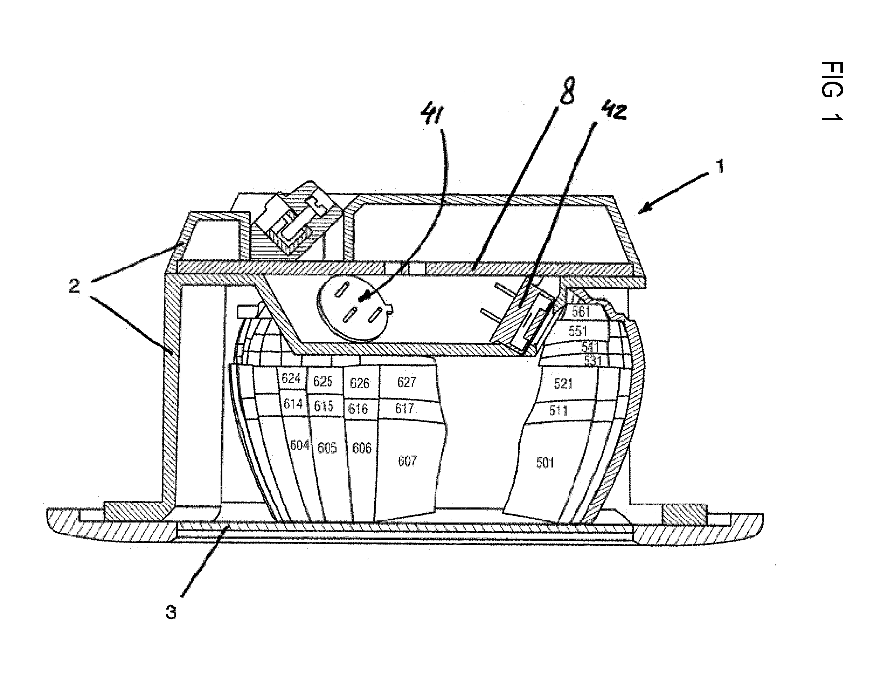

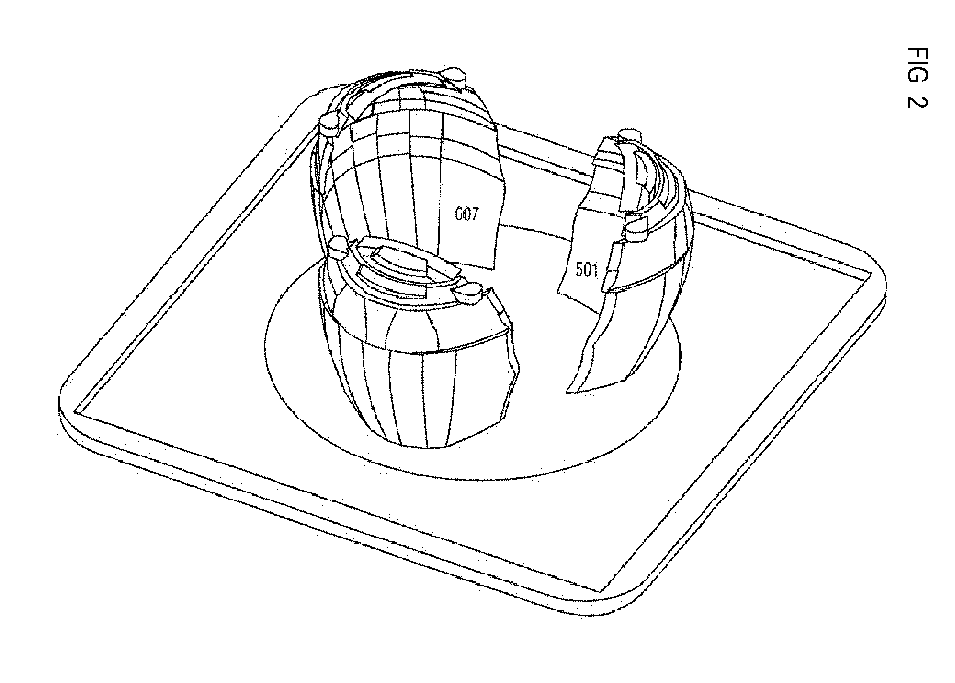

In figures 1 and 2, detector 1 includes an open frame 2 and a window 3. The frame 2 is meant to fit flush mounted in a standard electrical installation box for a ceiling, which limits its width to some 7 centimeters and its depth to some 5 centimetres. Openings in the side walls of frame 2 allow mirror assemblies to be positioned more closely to the walls of the electrical installation box, thus maximising the free area on the window 3 inbetween them.

Each such mirror assembly consists of adjacent mirrors on a single substrate, and fastening means for montage in the frame 2.

Outlook sensors 41, 42 have been mounted almost vertically in wall openings of a separate chamber, assuming that detector 1 is in operative orientation, where they are meant to receive radiation that has entered by the horizontal window 3 and has been reflected by primary outlook mirrors 501 - 591, 601 - 691, only some of which are shown. The near-upright orientation of outlook sensors 41, 42 directs them towards the opposing mirror surfaces and prevents them from receiving most of the stray light that may travel directly from the window 3 below. The same holds true for the third and last outlook sensor and its opposite primary outlook mirrors, which are not shown here but would have been allocated reference numbers 43, respectively 701 - 791, for reasons of consistency.

In this embodiment, there are no secondary mirrors.

The roof of the chamber that contains the outlook sensors, is a PCB 8. By using THT on bent contact wires of the outlook sensors, those are connected under an angle to the PCB 8. The PCB 8 itself includes an off-the-shelf microcontroller and constitutes a unit for processing outlook sensor signals. In an alternative embodiment, the unit for example could rely on an application specific integrated circuit instead.

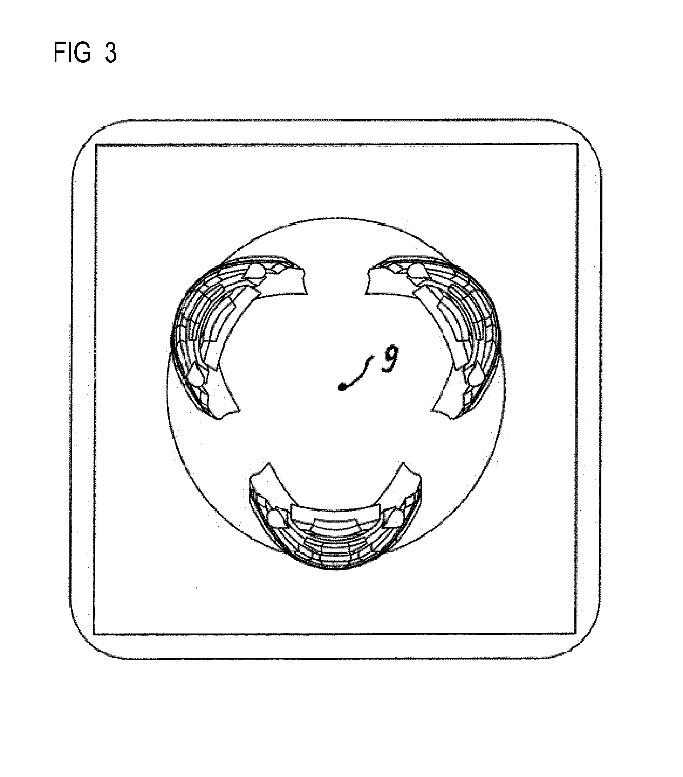

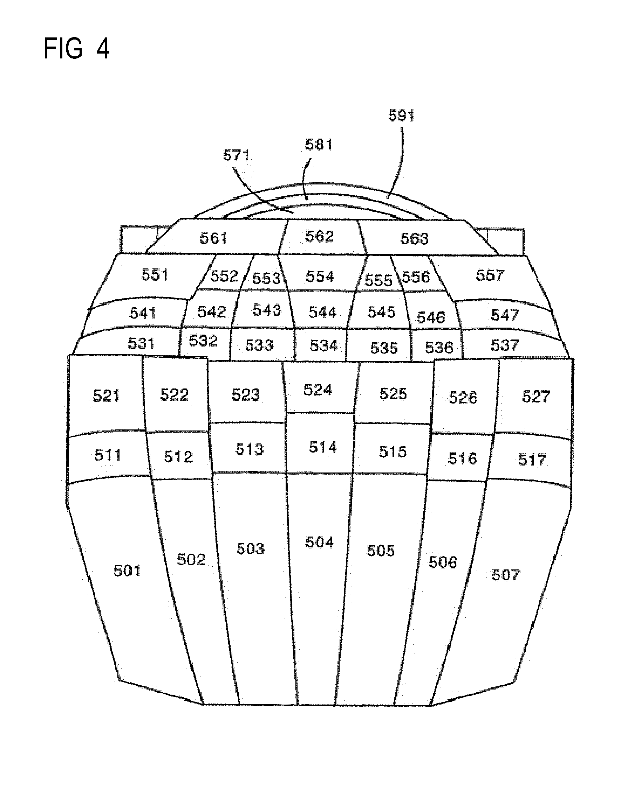

Figures 3 and 4 show three identical assemblies of adjacently arranged outlook mirrors, the reference numbers of which are 501 - 591, 601 - 691, respectively 701 - 791, and one such mirror assembly in greater detail. They are symmetrically positioned around a point on the inner window surface, which point is the centroid 9 within the projections of the near-mounted, mutually-facing outlook mirrors 501 - 507, 601 - 607, 701 - 707 onto the window. For more complex embodiments of the invention with a curved window or with irregular mirrors, the centroid 9 can be calculated by minimising the integral of locally perpendicular projections of the near-mounted, mutually-facing outlook mirrors onto the window, times their distance. In operative orientation of detector 1 as shown, the perpendicular in the centroid 9 to the inner window surface is a vertical that intersects the horizontal plane at floor level straight below.

The near-mounted, mutually-facing outlook mirrors 501 - 507, 601 - 607, 701 - 707 are mounted such that each mirror surface extends in full at obtuse angles to the local inner window surface. The mirror surfaces are essentially perpendicular to the local inner surface of the window 3, facing away slightly therefrom. In this way, in operative orientation, they reflect outside radiation upwards and back into the space that the perpendiculars to the local inner window surface in between them span, towards the more centrally mounted outlook sensors 41, 42, 43. These mirrors touch the inside of window 3. The largest extention of their mirror surfaces perpendicular to the local inner window surface is around 2 centimetres.

The largest extention of window 3 in front of near-mounted, mutually-facing outlook mirrors 501, 507, 601, 607, 701, 707 at the edge of the mirror assemblies is around 4 centimetres, up to the opposite mirror assembly. However, the largest extention of window 3 in front of those 504, 604, 704 in the centre of the mirror assemblies essentially is 6 centimetres, thanks to a gap of around 1 centimetre between neighbouring mirror assemblies opposite thereto. At the expense of mirror size, such gaps allow more radiation to enter the window 3 from the farthest detection zones, where a radiation source typically provides only some 10% of the intensity that it would provide right below detector 1. It has been found best to have three such gaps, and therefore to have all near-mounted, mutually-facing outlook mirrors in three mirror assemblies.

In operative orientation, the window 3 extends horizontally, which of course suits a flush mounted ceiling detector 1 well. Alternatively, for a small but efficient detector mounted on a wall, its generally downwards looking window would be tilted sideways a bit, towards the main extension of the room. A monolithic, flat window 3 provides both optical and esthetical qualities.

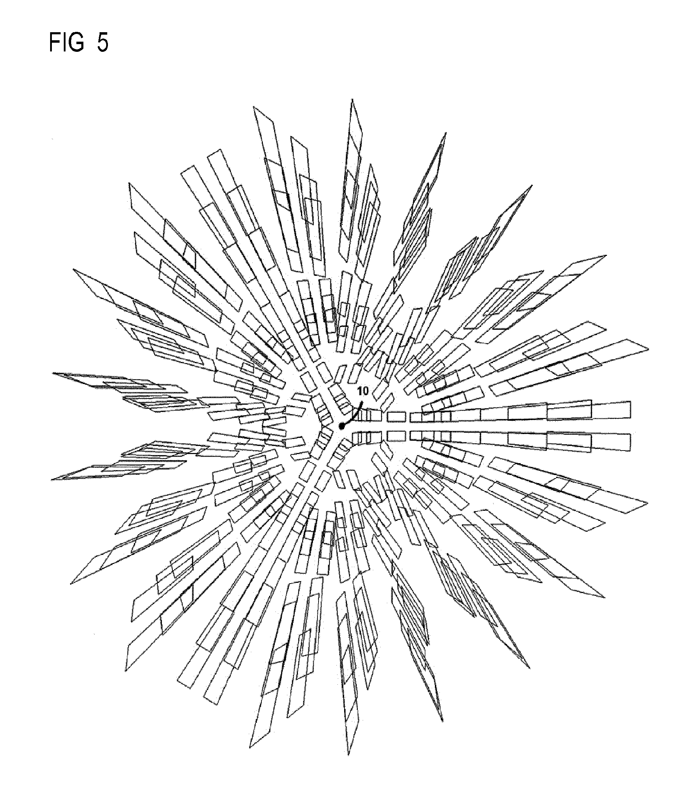

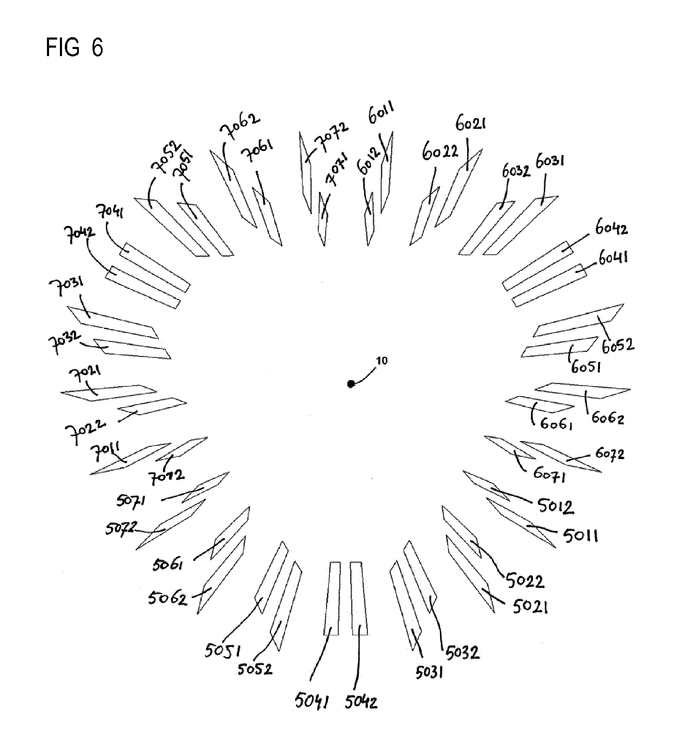

Each outlook sensor contains two pyroelectric sensor elements, arranged side by side. Therefore, in figures 5 and 6, for each sensor and each outlook mirror, there are effectively two detection zones, each shaped as an elongated quadrangle at floor level. At point 10, the perpendicular to the inner surface of window 3 in its centroid 9 within the near-mounted, mutually-facing outlook mirrors 501 - 507, 601 - 607, 701 - 707 intersects with the plane at floor level.

The pyroelectric sensor elements are sensitive to mid-infrared radiation. If a person moves through detection zones, his heat radiation is transported to the outlook sensors. The unit for processing outlook sensor signals then generates an output signal that is representative of his movement.

The nearest detection zones straight under the detector 1 in operative orientation are mapped by the highest located outlook mirrors 571 - 591, 671 - 691, 771 - 791, which are called lookdown mirrors and have short focal lengths, for obvious reasons. With the distance of the detection zones, by and large, the number of mirrors, their sizes and their focal lengths increase. The outermost ring of detection zones 5011 - 7072, which are mapped by the outlook mirrors 501 - 507, 601 - 607, 701 - 707 that are mounted near the window 3 below, easily reaches 6 meters in radius. These detection zones are evenly spread, in the sense that no section of 200° in the horizontal plane at floor level around the vertical below the detector 1 contains them all, irrespective of its direction. As seen right below detector 1, sectors without them, for instance the sector between detection zones 5011 and 5022, extend over 9° or so; much smaller therefore than the gaps of 160° at which the synergy of using a simply-connected window area for several near-mounted mirrors with distinct orientations occurs, or gaps of 90° at which the size of near-mounted mutually facing mirrors can be optimised as additional optical elements for the long range become superfluous.

## Claims

1. A detector, comprising
a frame (2),
at least one window (3) for allowing radiation to enter,
at least one outlook sensor (41, 42, 43) for sensing radiation,
a unit for processing outlook sensor signals,
outlook mirrors (501 - 591, 601 - 691, 701 - 791) that are shaped and mounted in the frame (2) for reflecting radiation from outside detection zones onto the outlook sensor (41, 42, 43),
wherein at least three outlook mirrors (501 - 507, 601 - 607, 701 - 707) are mounted near the window (3) such that they face each other,
**characterised in that**
in operation as intended the perpendicular to the inner window surface in its centroid (9) of the perpendicular projections of the mirror surfaces of the near-mounted mutually-facing outlook mirrors (501 - 507, 601 - 607, 701 - 707) onto the inner window surface intersects the horizontal plane at floor level outside, and
any sector of said horizontal plane around said perpendicular that lacks detection zones of the near-mounted mutually-facing outlook mirrors (501 - 507, 601 - 607, 701 - 707) extends over 160° at most.

2. Detector according to claim 1, wherein
any such sector extends at an acute angle.

3. Detector according to any one of the preceding claims, wherein
an outlook mirror is mounted near the window (3) in the sense that its closest point on the mirror surface is closer than 60% of the largest extention of its mirror surface perpendicular to the local inner window surface.

4. Detector according to any one of claims 1 to 2, wherein
an outlook mirror is mounted near the window (3) in the sense that its closest mirror surface is closer than 20% of the largest extention of the window (3) in front thereof.

5. Detector according to any one of the preceding claims, wherein
outlook mirrors face each other in the sense that from the mirror surface of each one the mirror surface of at least one other is visible.

6. Detector according to any one of claims 1 to 4, wherein outlook mirrors face each other in the sense that for each one the radiation from the outside detection zones enters the window (3) in an area that overlaps at least one such area of another.

7. Detector according to any one of the preceding claims, wherein
in operation as intended the perpendicular to the inner window surface in its centroid (9) of the perpendicular projections of the mirror surfaces of the near-mounted mutually-facing outlook mirrors (501 - 507, 601 - 607, 701 - 707) onto the inner window surface is located inbetween the near-mounted mutually-facing outlook mirrors (501 - 507, 601 - 607, 701 - 707) and intersects the horizontal plane at floor level outside.

8. Detector according to any one of the preceding claims, wherein
at least three of the near-mounted mutually-facing outlook mirrors (501 - 507, 601 - 607, 701 - 707) are mounted such that each mirror surface at least in some locations thereof extends at an obtuse angle to the inner window surface where the perpendicular to the latter intersects the former.

9. Detector according to any one of the preceding claims, wherein
the near-mounted mutually-facing outlook mirrors (501 - 507, 601 - 607, 701 - 707) are mounted such that at least some radiation that one of them so reflects, has travelled in between two of them (501 - 507, 601 - 607, 701 - 707).

10. Detector according to any one of the preceding claims, wherein
each of the near-mounted mutually-facing outlook mirrors (501 - 507, 601 - 607, 701 - 707) is part of one of three closely arranged mirror assemblies.

11. Detector according to any one of the preceding claims, wherein
in operation as intended the perpendicular to the inner window surface in its centroid (9) of the perpendicular projections of the mirror surfaces of the near-mounted mutually-facing outlook mirrors (501 - 507, 601 - 607, 701 - 707) onto the inner window surface is a vertical.

12. Detector according to any one of the preceding claims, wherein
the unit for processing outlook sensor signals is suitable for generating an output representative of the movement of an object through the detection zones.
